# EUROPEAN PATENT APPLICATION

(11) **EP 4 726 894 A1**
(43) Date of publication of application: **15.04.2026**
(21) Application number: 25754575.6
(22) Date of filing: 06.02.2025
(51) Int. Cl.: H01M 50/30, H01M 50/342, H01M 50/249

(54) **BATTERY PACK AND VEHICLE INCLUDING SAME**

(30) Priority: 15.02.2024 KR 20240021861
(71) Applicant: LG Energy Solution, Ltd., Seoul 07335 (KR)
(72) Inventor: CHANG, Hyuk-Kyun, Daejeon 34122 (KR); KIM, Soo-Youl, Daejeon 34122 (KR)
(74) Representative: Plasseraud IP
(86) International application number: PCT/KR2025/001761
(87) International publication number: WO 2025/173985

(57) **Abstract**

A battery pack according to an embodiment of the present disclosure includes a plurality of battery cells; a pack case configured to store the plurality of battery cells and having a discharge hole configured to discharge gas generated inside to the outside; a first protective cover configured to cover a first area, which is a partial area of the discharge hole; and a second protective cover installed closer to the discharge hole than the first protective cover and configured to cover a second area, which is another partial area of the discharge hole, so as to have a cover area overlapping the first protective cover.

## Description

### TECHNICAL FIELD

The present disclosure relates to a battery pack and the like and, more specifically, to a battery pack with an improved structure for suppressing ignition factors from being discharged to the outside, thereby further enhancing safety, and the like.

This application is based on and claims priority from Korean Patent Application No. 10-2024-0021861, filed on February 15, 2024, with the Korean Intellectual Property Office, the disclosure of which is incorporated herein in its entirety by reference.

### BACKGROUND ART

As the demand for portable electronic products such as laptops, video cameras, mobile phones, and the like that use electricity as a driving source is rapidly increasing and as mobile robots, electric bicycles, electric carts, electric vehicles, and the like are widely commercialized, active researches on high-performance secondary batteries capable of being repeatedly charged and discharged are underway.

Commercialized secondary batteries include nickel-cadmium batteries, nickel-hydrogen batteries, nickel-zinc batteries, lithium secondary batteries, and the like, and among them, lithium secondary batteries are being studied more intensively than other types of secondary batteries and applied more extensively to actual products due to their features of high energy density and high operating voltage, as well as their advantages of flexible charging and discharging according to the rare memory effect and a very low self-discharge rate, compared to nickel-based secondary batteries.

Recently, secondary batteries have been widely used in medium- and large-sized devices such as electric vehicles and energy storage systems (ESSs), as well as in small devices such as portable electronic devices.

In this case, a battery module in which multiple secondary batteries electrically connected to each other are stored inside a module case is generally applied thereto, and furthermore, a battery pack in which multiple battery modules are electrically connected to each other is also applied to the case where high power or large capacity is required. Recently, a battery pack in the form of a cell-to-pack has been manufactured in which multiple battery cells are directly stored in a pack housing without being modularized.

Although secondary batteries with such advantages are being used in various forms, swelling, rush current application, overheating due to Joule heating, or thermal runaway due to decomposition reaction of the electrolyte may occur due to the characteristics of secondary batteries.

In addition, in the case where an event such as a short circuit or excessive temperature rise between secondary batteries occurs, a large amount of venting gas may be generated, and if it worsens, high-temperature particles including electrode plate fragments, active material fragments, or aluminum particles, as well as flames, may be released in the form of sparks, so securing the safety of the battery pack is even more important.

In the case of medium- and large-sized battery packs applied to vehicles such as electric vehicles that users ride, a large number of battery cells and battery modules are intensively mounted to increase output and capacity, so not only may a large fire occur, but also human casualties may occur. Therefore, it is necessary to more strongly suppress and control thermal events that may occur in the battery module or battery packs from the initial stage.

Although conventional battery packs have a structure to discharge high-temperature gas generated therein through a venting unit provided in the pack case when an abnormal situation occurs, high-temperature particles may leak out in the form of sparks during such a process.

As described above, if ignition factors such as sparks leak out of the pack case together with gas, a flame or fire is more likely to occur outside the battery pack due to various ignition environments such as reaction with oxygen outside the battery pack, and if a fire occurs outside the battery pack, the fire may spread to other adjacent battery packs or devices equipped with the battery pack, which may cause fatal and serious safety problems.

Therefore, there is a great need for technology to effectively suppress the occurrence or spread of flame or fire outside the battery pack by preventing sparks or flame from being discharged outside the battery pack through the venting unit.

### DISCLOSURE

### Technical Problem

The present disclosure is designed to solve the problems of the related art, and therefore the present disclosure is directed to providing a battery pack with an improved structure for effectively suppressing ignition factors such as high-temperature particles and sparks from being discharged to the outside, thereby further enhancing safety, and the like.

The technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery pack including: a plurality of battery cells; a pack case configured to store the plurality of battery cells and having a discharge hole configured to discharge gas generated inside to an outside; a first protective cover configured to cover a first area, which is a partial area of the discharge hole; and a second protective cover installed closer to the discharge hole than the first protective cover and configured to cover a second area, which is another partial area of the discharge hole, so as to have a cover area overlapping the first protective cover.

Here, the pack case of the present disclosure may include a base frame on which the plurality of battery cells are seated, and a side frame having the discharge hole, and in this case, the first and second protective covers may be configured to face the side frame.

In addition, the second protective cover of the present disclosure may be installed spaced apart from the first protective cover, and the first or second protective cover may include a coupling portion configured physically connect the first and second protective covers so that the first and second protective covers are spaced apart from each other.

Depending on the embodiment, one or more of the first and second protective covers of the present disclosure may be configured in a mesh form with a porous structure.

Specifically, the first area of the present disclosure may be an upper area of the discharge hole, and the second area may be a lower area of the discharge hole.

Preferably, a lower end of the first protective cover may be positioned higher than a lower end of the discharge hole, and an upper end of the second protective cover may be positioned lower than an upper end of the discharge hole.

Furthermore, the first protective cover of the present disclosure may be configured to be connected to an upper frame of the pack case, and the second protective cover of the present disclosure may be configured to be connected to a base frame of the pack case.

In addition, the first protective cover of the present disclosure may include a first protrusion configured to protrude outward, and the second protective cover may include a second protrusion configured to protrude outward.

Specifically, the first protrusion may be configured to be inclined upward, and the second protrusion may be configured to be inclined downward.

In another aspect of the present disclosure, a battery pack according to the present disclosure may further include a module case having an inner space in which the plurality of battery cells are stored and a venting hole formed at a top thereof in communication with the inner space.

### Advantageous Effects

According to one aspect of the present disclosure, it is possible to ensure the safety and reliability of the battery pack by preventing ignition factors such as sparks from being discharged to the outside of the pack case while effectively discharging venting gas or the like to the outside.

In addition, according to the present disclosure, it is possible to solve various problems caused by rapid discharge of the venting gas or the like by effectively discharging the venting gas generated inside to the outside and guiding its movement path to be bent such that the venting gas or the like is weakened and such that its straightness is disrupted.

In particular, according to one aspect of the present disclosure, it is possible to effectively induce internal gas to move out through the mesh structure formed in the protective cover, while effectively implementing physical blocking, restraint, or capturing of the ignition factors such as high-temperature particles and sparks, thereby effectively reducing or suppressing particles such as sparks from leaking out.

In addition, the present disclosure may have various other effects, and these will be described in the respective embodiments, or description of effects that may be easily inferred by those skilled in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a perspective view of a battery pack according to an embodiment of the present disclosure.
FIG. 2 is a drawing illustrating the internal configuration of the battery pack illustrated in FIG. 1.
FIG. 3 is an enlarged view of a part of the battery pack illustrated in FIG. 1.
FIG. 4 is a drawing illustrating a path and direction in which gas or the like is discharged inside the battery pack according to an embodiment of the present disclosure.
FIG. 5 is a drawing illustrating a protective cover according to an embodiment of the present disclosure.
FIGS. 6 and 7 are drawings illustrating the relationship of a first protective cover, a second protective cover, and a discharge hole according to an embodiment of the present disclosure.
FIG. 8 is a drawing illustrating primary functions of a protective cover according to an embodiment of the present disclosure.
FIGS. 9 and 10 are drawings illustrating structures of a first and second protective covers according to an embodiment of the present disclosure.
FIG. 11 is a drawing illustrating a protective cover implemented in a mesh form according to an embodiment of the present disclosure.
FIG. 12 is a drawing illustrating an example of a protective cover provided with a protrusion.
FIG. 13 is a drawing illustrating an example of a shape of a protective cover of the present disclosure.
FIG. 14 is a drawing illustrating an example of the arrangement relationship of a first protective cover and a second protective cover.
FIG. 15 is a drawing schematically illustrating a vehicle including a battery pack according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, and does not represent the entire scope of the disclosure, so it should be understood that other equivalents and modifications could be made thereto without departing from the scope of the disclosure.

In addition, describing the present disclosure, descriptions of related known functions or configurations, which may obscure the subject matter of the present disclosure, will be omitted.

In this specification, the expression "an element 'includes' another element" should be understood that other elements other than the two elements may be further included, instead of being excluded.

In addition, through the specification, the expression "an element is 'connected' to another element" should be understood not only that the elements may be "directly connected" to each other, but also that the two elements may be "indirectly connected" to each other through another member therebetween.

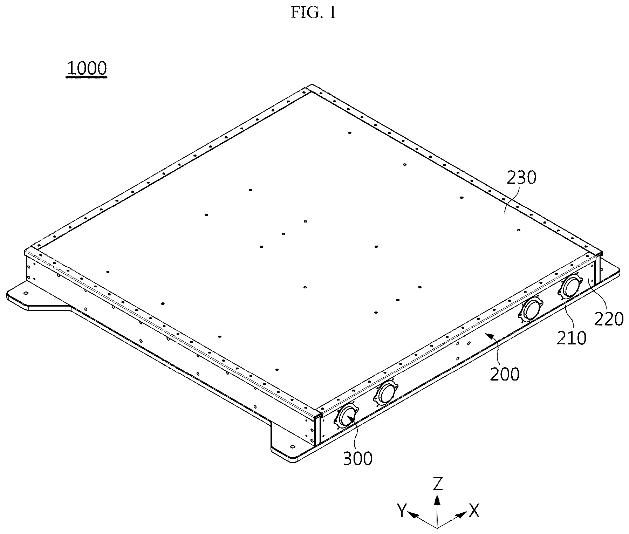

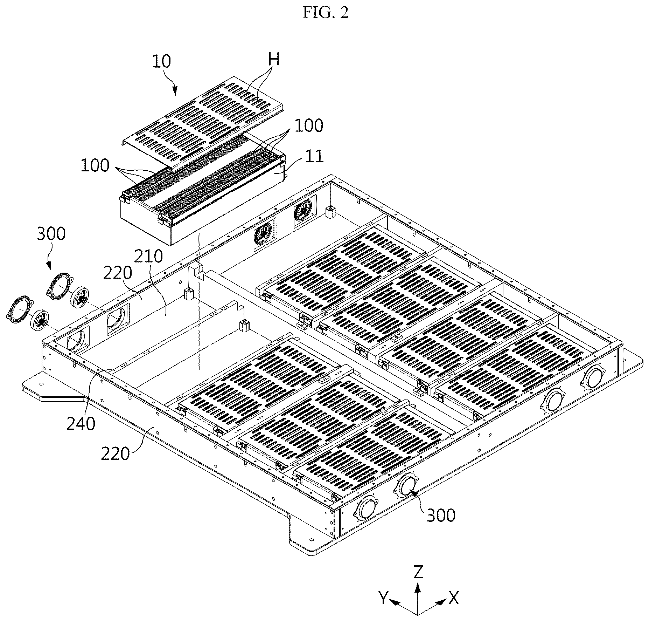

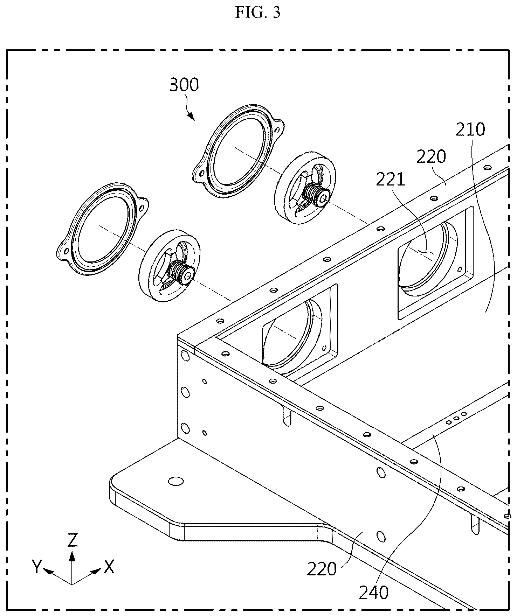

FIG. 1 is a perspective view of a battery pack 1000 according to an embodiment of the present disclosure, FIG. 2 is a drawing illustrating the internal configuration of the battery pack 1000 illustrated in FIG. 1, and FIG. 3 is an enlarged view of a part of the battery pack 1000 illustrated in FIG. 1.

As illustrated in the drawings, the battery pack 1000 according to an embodiment of the present disclosure may be configured to include a battery cell 100 and a pack case 200.

A plurality of battery cells 100 may include an electrode assembly, a cell case that stores the electrode assembly, and an electrode lead that is connected to the electrode assembly and extends outside the cell case, thereby functioning as an electrode terminal. The plurality of battery cells 100 may be electrically connected to each other in series, in parallel, or a combination thereof.

The battery cell 100 may be a pouch-type secondary battery. A cell case of the pouch-type secondary battery may be configured as a pouch in which a metal layer made of aluminum is interposed between polymer layers.

The plurality of battery cells 100, as illustrated in FIG. 2, may be arranged side by side in a front-back direction (Y-axis direction) while standing in a vertical direction (Z-axis direction).

The present disclosure is not limited to a specific type or shape of battery cell 100, and various battery cells 100 known at the time of filing the present disclosure may be applied to configure the battery pack 1000 of the present disclosure. In the present embodiment, a pouch-type secondary battery having a high energy density and easy stacking will be described, but it is obvious that a cylindrical or prismatic secondary battery may be applied to the battery cell 100.

The plurality of battery cells 100 may be modularized into one or more battery modules 10 as illustrated in FIG. 2, and a plurality of battery modules 10 may be provided inside the pack case 200.

That is, the battery pack 1000 according to the present disclosure may include multiple battery modules 10, and the plurality of battery cells 100 included in the battery pack 1000 may be divided and included in the multiple battery modules 10.

The battery module 10 may include a module case 11 configured to store at least some of the plurality of battery cells 100 in its inner space, and may include a bus-bar assembly and/or a module terminal electrically connected to the plurality of battery cells 100 stored therein.

In addition, the battery module 10 may include a venting hole H. The venting hole H induces gas or the like generated from the battery cells 100 stored inside the module case 11 to be discharged to the outside of the module case 11.

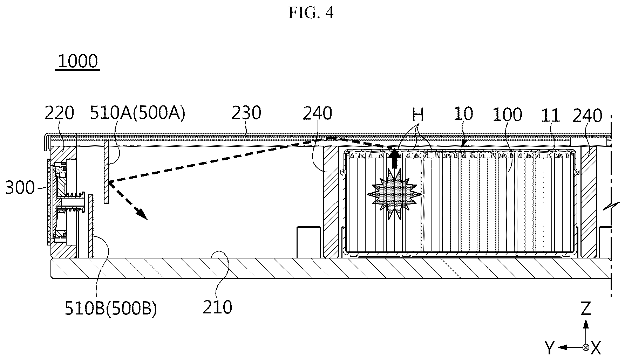

As illustrated in FIG. 2, in the case where the venting hole H is provided at the top of the module case 11, the venting gas and/or sparks may be guided to be discharged to the upper portion of the battery module 10 (see FIG. 4).

The pack case 200 is a configuration that provides a basic structure of the battery pack 1000, and the battery cells 100 are stored in its inner space.

The pack case 200 according to an embodiment of the present disclosure may be configured to include a base frame 210, a side frame 220, and an upper frame 230. The upper frame 230, also referred to as a pack lid, may be coupled to the base frame 210 and the side frame 220 at the top (based on the Z axis) thereof so as to cover the top of the plurality of battery cells 100.

The upper frame 230 protects components such as the battery cells 100 stored inside, and prevents venting gas and/or sparks generated from the battery cells 100 from being discharged to the outside of the pack case 200, particularly, to the upper portion.

In particular, the upper frame 230, as shown in FIG. 4, may interwork with the venting hole H of the battery module 10 described above, thereby implementing directional venting in which venting gas and sparks generated inside are guided to move toward a venting device 300 or the like.

One or more of the base frame 210, the side frame 220, and the upper frame 230 may be configured as a plate, and may be configured in the shape of a polyhedron (e.g., a cuboid) having a certain thickness or more.

Depending on the embodiment, at least a part of the side frame 220 and the base frame 210 may be configured in an integrated form, and the connection between adjacent frames may be performed by various methods, such as bolting, laser welding, or ultrasonic welding.

One or more of the base frame 210, the side frame 220, and the upper frame 230 may have an inner surface made of clad metal, or may have a flame-retardant material such as GFRP attached to the inner surface.

One or more of the frames 210, 220, and 230 constituting the pack case 200 may be made of a metal material such as SUS (stainless steel) with high strength, or a plastic material such as ABS resin (acrylonitrile-butadiene-styrene copolymer) with high heat resistance, temperature resistance, and impact resistance, in order to effectively implement physical protection of internal components, and may be made of different materials between portions depending on the embodiment.

According to the embodiment, the pack case 200 may further include a cross-beam 240 in the shape of a partition extending in the longitudinal direction (Y-axis direction) or the transverse direction (X-axis direction) as illustrated in the drawing. In this case, the battery modules 10 may be stored in each of the compartment spaces formed by the cross-beams 240.

This compartment space may function as a kind of independent chamber or compartment, and may not only physically protect the respective battery modules 10, but also primarily prevent the thermal event occurring in the battery module 10 from spreading or transferring to another adjacent battery module 10.

It is also desirable that the cross-beams 240 forming the compartment spaces be made of a material with high heat resistance and physical rigidity, like the respective frames constituting the pack case 200.

The cross-beam 240 may be installed to be spaced a predetermined distance apart from the upper frame 230. That is, the entirety or a portion of the upper end (based on the Z-axis direction) of the cross-beam 240 may be configured to be spaced a predetermined distance apart from the lower surface of the upper frame 230, instead of coming into contact with the same.

According to this implemented configuration, as shown in FIG. 4, a space for the movement of gas or the like may be provided between the cross-beam 240 and the pack lid (upper frame 230), so that gas or the like generated inside may be more effectively guided to head toward the venting device 300 or the discharge hole 221 through the rising due to high temperature, the pressure difference inside and outside the pack case 200, the flowing characteristics of the fluid flowing along the surface, and the physical reflection path.

In the case where flame is discharged together with the venting gas, although not shown in the drawings, a guider or venting rib in a bent shape, or a bent member for changing direction may be provided on the upper frame 230 so as to disrupt the strong straightness, which is the behavioral characteristics of the flame, and weaken the flame.

The battery pack 1000 of the present disclosure may include a venting unit that discharges gas or the like generated inside to the outside.

Depending on the embodiment, the venting unit may be implemented as a discharge hole 221 that passes through the pack case 200, preferably the side frame 220 of the pack case 200, so that the inside and the outside of the pack case 200 communicate with each other.

The venting unit may be implemented as a venting device 300 that is configured to be opened by the pressure when the internal pressure increases due to venting gas generated inside the pack case 200, thereby discharging the venting gas to the outside of the pack case 200. The venting device 300 may be installed to be mounted in the discharge hole 221.

For example, the venting device 300 may be configured such that the entrance is closed by the elastic restoring force of an elastic body to prevent external foreign substances, moisture, or the like from flowing into the pack case 200 in a normal state, and is opened when the internal pressure exceeds a standard threshold configured by the elastic restoring force.

The present disclosure is not limited to a specific type or form of the venting device 300, and various venting devices 300 known at the time of filing the present disclosure may be applied to configure the battery pack 1000 of the present disclosure.

Protective covers 500A and 500B of the present disclosure are configured to cover the discharge hole 221 or the venting device 300 mounted in the discharge hole 221, so that the venting gas generated inside may be effectively discharged to the outside of the pack case 200, but the debris, particles, or sparks (hereinafter referred to as "sparks or the like") that may accompany the venting gas may be suppressed or minimized from being discharged to the outside.

Hereinafter, specific configurations and functions of the protective covers 500A and 500B according to a preferred embodiment of the present disclosure will be described in detail with reference to the attached drawings.

The axes depicted in the drawings, the terms indicating the axes, and terms indicating directions such as up, down, front, back, vertical, or the like with respect to the axes are only intended to provide relative standards illustrating the embodiments of the present disclosure, and are not intended to specify any direction or location in absolute terms, so they may vary depending on the position of a target object, the position of an observer, the viewing direction, or the like.

Hereinafter, the embodiments of the present disclosure will be described by defining the Z-axis as the up-down direction or vertical direction as explained above, and according thereto, the Y-axis will be defined as the front or back direction, and the X-axis will be defined as the left or right direction.

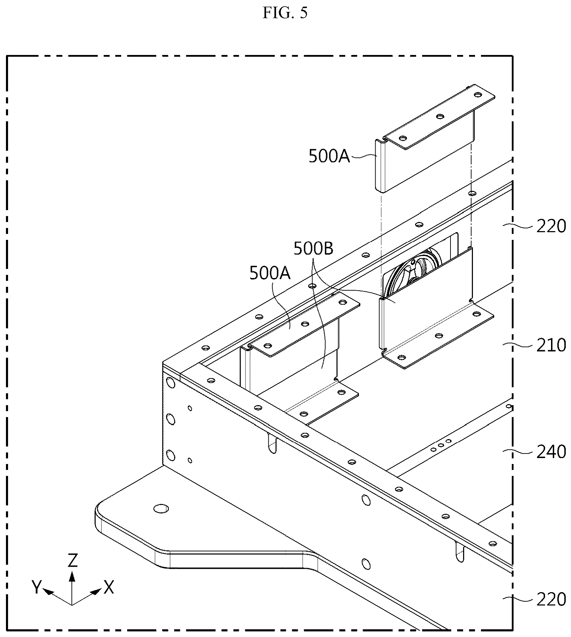

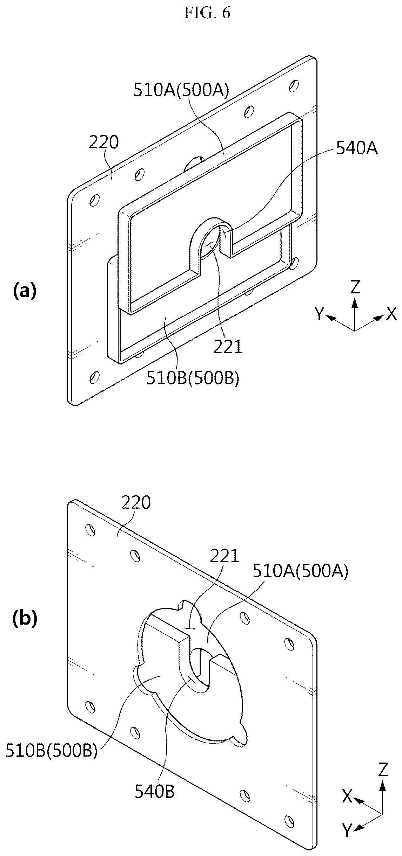

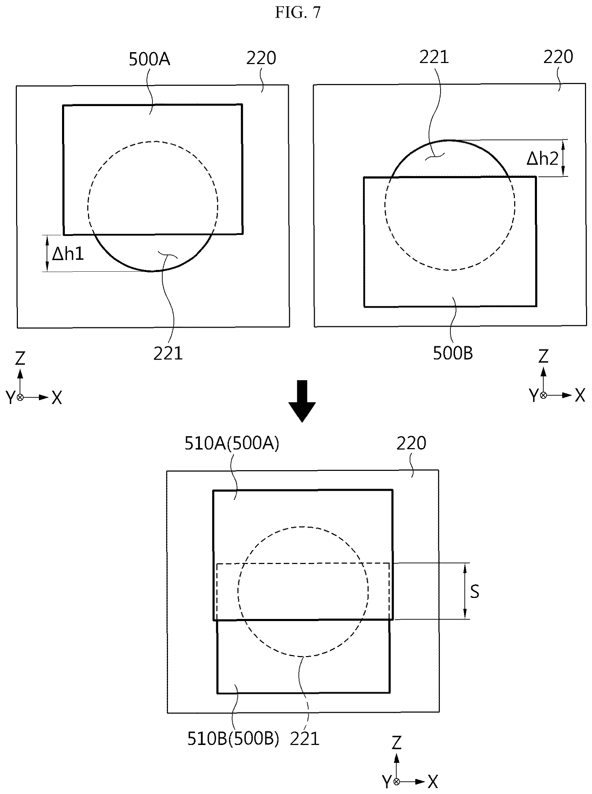

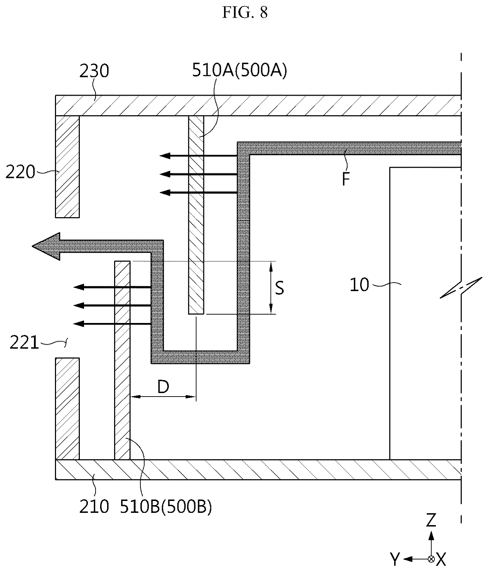

FIG. 5 is a drawing illustrating protective covers 500A and 500B according to an embodiment of the present disclosure, FIGS. 6 and 7 are drawings illustrating the relationship of a first protective cover 500A, a second protective cover 500B, and a discharge hole 221 according to an embodiment of the present disclosure, and FIG. 8 is a drawing illustrating primary functions of protective covers 500A and 500B according to an embodiment of the present disclosure.

As described above, the protective covers 500A and 500B of the present disclosure may be configured to cover the discharge hole 221 or the venting device 300 mounted in the discharge hole 221, and specifically may include a first protective cover 500A and a second protective cover 500B as illustrated in FIG. 5 and the like.

The first protective cover 500A and the second protective cover 500B are configured to cover a partial area of the discharge hole 221, respectively, and, as illustrated in the drawing, the second protective cover 500B is configured to have a cover area S (see FIG. 7) that overlaps the area covered by the first protective cover 500A.

Hereinafter, the area of the discharge hole 221 covered by the first protective cover 500A will be referred to as a "first area," and the area of the discharge hole 221 covered by the second protective cover 500B will be referred to as a "second area." As illustrated in the drawing, the second area is a partial area of the discharge hole 221 and is not identical to the first area, and includes an area (hereinafter referred to as an "overlapping area") that is partially common with the first area.

As described above, in the case where the venting device 300 is mounted in the discharge hole 221, the first area covered by the first protective cover 500A and the second area covered by the second protective cover 500B may be partial areas of the venting device 300, respectively.

The protective covers 500A and 500B of the present disclosure basically perform a function of physically blocking sparks or the like from being discharged or leaking to the outside through the discharge hole 221 or the venting device 300 mounted in the discharge hole 221.

The protective covers 500A and 500B of the present disclosure are preferably configured to be made of or include a material (e.g., mica or the like) that effectively blocks high-temperature sparks or the like and has low thermal conductivity and excellent heat resistance, and/or fire resistance so that the influence of sparks or the like may be minimized. Depending on the embodiment, the protective covers 500A and 500B may be configured as a metal material having rigidity and heat resistance.

The protective covers 500A and 500B of the present disclosure may be installed so as to face the side frame 220 in the case where the discharge hole 221 is provided on the side frame 220 of the pack case 200.

It is preferable that the second protective cover 500B be installed further back than the first protective cover 500A on a path through which gas generated inside flows to the discharge hole 221. That is, based on the discharge hole 221, the second protective cover 500B is preferably installed closer to the discharge hole 221 than the first protective cover 500A.

In addition, the second protective cover 500B of the present disclosure is preferably installed closer to the discharge hole 221 than the first protective cover 500A at a position D (see FIG. 8) physically spaced apart from the first protective cover 500A as illustrated in the drawing, instead of coming into contact therewith.

As described above, in the case where the first and second protective covers 500A and 500B are physically spaced a distance D apart from each other and have distinct areas respectively covered by them and an overlapping area S commonly covered by them, the discharge path (venting path) F through which gas, sparks, or the like are discharged may be configured as a bent or curved path (for example, a zigzag-shaped path) as illustrated in FIG. 8.

As described above, in the case where the discharge path F of gas is configured in a bent form, the straightness of the venting gas may be disrupted, and as the discharge path is expanded or extended, the width at which sparks or the like are physically blocked or captured may also increase, thereby significantly suppressing the phenomenon in which ignition factors such as sparks escape through the discharge hole 221 together with the venting gas.

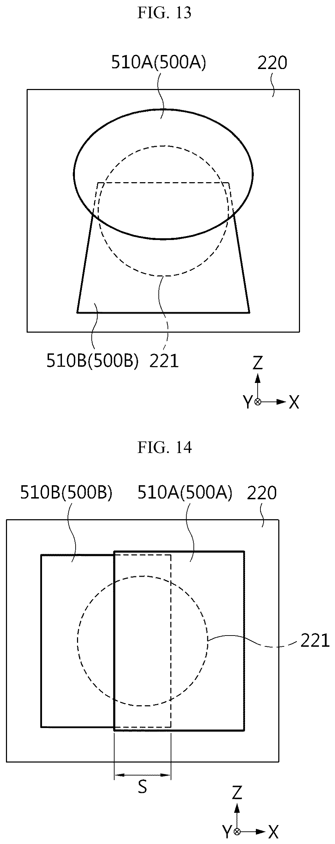

If the first protective cover 500A and the second protective cover 500B are configured to cover different areas of the discharge hole 221 from each other while having a common overlapping area S and are installed spaced apart from each other, the technical idea of the present disclosure described above may be implemented, so the first and second protective covers 500A and 500B may be configured in various shapes or structures including the embodiment illustrated in FIG. 13, and may have various positions or arrangements including the embodiment illustrated in FIG. 14.

In addition, in the case where the venting device 300 is mounted in the discharge hole 221 and where a nozzle protruding toward the inside of the pack case 200 is provided in the center of the venting device 300, the first protective cover 500A or/and the second protective cover 500B may be configured to avoid the nozzle or may have reception spaces 540A and 540B in the shape of an arch or reverse arch to be provided around the nozzle.

Gas or the like generated from the battery cell 100 or battery module 10 tends to rise because it is in a high-temperature state, and, as described with reference to FIG. 4, a venting space may be formed on the top of the battery pack 1000 by the structure of the venting hole H of the battery module 10, the upper frame 230 and cross-beam 240 of the pack case 200, and the like, so the venting gas and sparks move toward the discharge hole 221 on the top of the battery pack 1000.

Therefore, in the case where the first protective cover 500A covering a partial area of the discharge hole 221 is configured to cover the upper part of the discharge hole 221, it is most likely to collide with sparks or the like, thereby more reliably suppressing the external discharge of sparks or the like.

On the other hand, since the venting gas is a gaseous fluid, it tends to avoid the first protective cover 500A or the like by the internal pressure, and may be smoothly discharged to the outside through the discharge hole 221 or the like.

To this end, it is preferable that the first area covered by the first protective cover 500A of the present disclosure be configured to be the upper area of the discharge hole 221, and that the second area covered by the second protective cover 500B be configured to be the lower area of the discharge hole 221 according thereto.

Specifically, as illustrated in FIG. 7, it is preferable that the lower end of the first protective cover 500A be configured to be positioned higher (△h1) than the lower end of the discharge hole 221, and that the upper end of the second protective cover 500B be configured to be positioned lower (△h2) than the upper end of the discharge hole 221.

In addition, it is preferable that the lower end of the first protective cover 500A extend downward (based on the Z-axis) to a position lower than the center position of the discharge hole 221 and that the upper end of the second protective cover 500B extend to a position higher than the center position of the discharge hole 221, so that an overlapping area S may be formed between the first area of the first protective cover 500A and the second area of the second protective cover 500B.

Although the protective covers 500A and 500B are illustrated to be comprised of two members such as the first protective cover 500A and the second protective cover 500B in the drawing, the protective covers may be configured as three or more protective covers as long as they are able to guide the discharge path F to be bent and physically block sparks or the like.

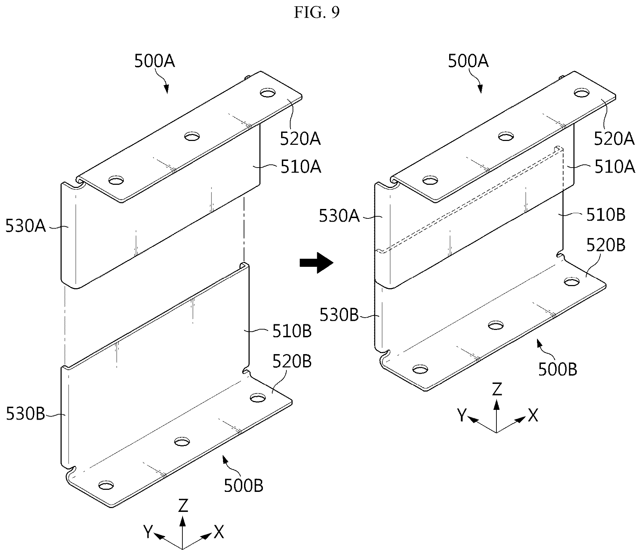

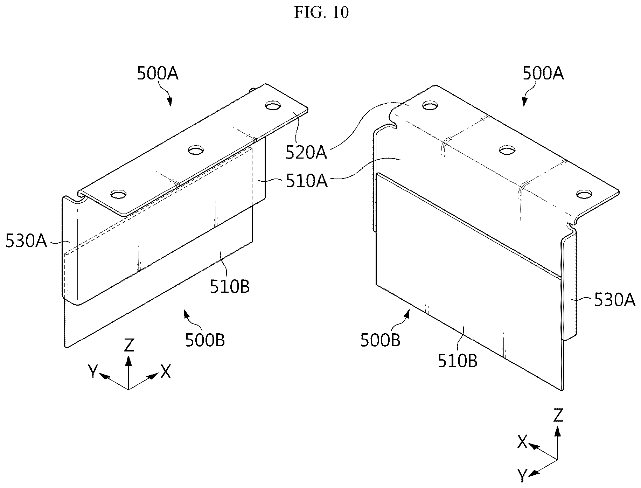

FIGS. 9 and 10 are drawings illustrating structures of first and second protective covers 500A and 500B according to an embodiment of the present disclosure.

As illustrated in the drawings, the first protective cover 500A of the present disclosure may be configured to include a first body 510A, a first coupling portion 520A, and a first coupling portion 530A, and the second protective cover 500B may be configured to include a second body 510B, a second coupling portion 520B, and a second coupling portion 530B.

The first body 510A of the first protective cover 500A may be configured to face the discharge hole 221 to cover the first area of the discharge hole 221, and, as illustrated in the drawing, may be configured as a plate standing in a vertical direction (Z-axis direction) so as to face the side frame 220.

The first coupling portion 520A of the first protective cover 500A may be configured to be coupled to the first body 510A or extend in a horizontal direction (on the XY plane) from the first body 510A, and may be coupled to the lower surface of the upper frame 230 by bolting, welding, or bonding.

According to the above configuration of the present disclosure, the first protective cover 500A may be more easily coupled to the pack case 200, thereby improving the assembly efficiency and space utilization and more stably blocking sparks or the like introduced from the top.

Depending on the embodiment, the first protective cover 500A may further include a first coupling portion 530A. As illustrated in the drawing, the first coupling portion 530A may be configured to extend from at least one of the left and right ends of the first body 510A toward the side frame 220, and may be coupled to the side frame 220 by bonding, bolting, or welding.

As described above, since the first protective cover 500A has a structure in which the upper and side ends are bent in opposite directions and physically supported by the upper frame 230 and the side frame 220, respectively, it may have structural rigidity and also prevent external discharge of sparks or the like in multiple directions.

The second body 510B of the second protective cover 500B may be configured to face the discharge hole 221 to cover the second area (lower area) of the discharge hole 221, and may be configured as a plate standing in a vertical direction (Z-axis direction), like the first body 510A, so as to face the side frame 220.

The second coupling portion 520B of the second protective cover 500B may be configured to be coupled to the second body 510B or to extend in the horizontal direction (on the XY plane) from the second body 510B so as to be coupled to the base frame 210 by bolting, welding, or bonding.

As described above, in the case where the second protective cover 500B is physically connected to the base frame 210 through the second coupling portion 520B, not only may the blocking of sparks or the like introduced from the bottom be implemented more stably, but also, as described with reference to FIG. 8, the discharge path F of the venting gas may be induced to have a zigzag shape or the like.

Depending on the embodiment, the second protective cover 500B may further include a second coupling portion 530B. As illustrated in the drawing, the second coupling portion 530B may be configured such that at least one of the left and right ends of the second body 510B extend toward the side frame 220, and may be coupled to the side frame 220 by bonding, bolting, or welding.

As illustrated in FIG. 9, the second protective cover 500B may be configured to be partially inserted to the first protective cover 500A so that an overlapping area S may be formed between the first area of the first protective cover 500A and the second area of the second protective cover 500B.

In the case where the embodiment is implemented so that both the first coupling portion 530A of the first protective cover 500A and the second coupling portion 530B of the second protective cover 500B come into contact with or are coupled to the side frame 220, it is preferable that the width (based on the Y-axis) of the second coupling portion 530B be configured to be smaller than the width of the first coupling portion 530A so that the second protective cover 500B is able to be inserted into the first protective cover 500A. According thereto, the left-right length (based on the X-axis) of the second body 510B may be configured smaller than the left-right length of the first body 510A.

In this case, the gap D between the first protective cover 500A and the second protective cover 500B, specifically, the gap D between the first body 510A and the second body 510B, may be variably set depending on the relationship between the width (based on the Y-axis) of the first coupling portion 530A and the width (based on the Y-axis) of the second coupling portion 530B.

According to an embodiment, the second protective cover 500B of the present disclosure may be implemented in a plate shape as illustrated in FIG. 10. In this case, it is also obvious that second protective cover 500B must be positioned lower than the first protective cover 500A so that the overlapping area S is formed between the first protective cover 500A and the second protective cover 500B.

According to the implemented configuration of the present disclosure, the gap D between the first protective cover 500A and the second protective cover 500B, as well as the overlapping area S between the first protective cover 500A and the second protective cover 500B, may be effectively implemented, and the protective covers 500A and 500B may be implemented with a simpler structure.

According to the implemented configuration of the present disclosure, not only may the first protective cover 500A and the second protective cover 500B be manufactured as a single object, but also the protective cover 500A and 500B of the present disclosure may be provided on the battery pack 1000 only by the process of coupling the first coupling portion 520A of the first protective cover 500A, which functions as a kind of flange, to the upper frame 230 of the pack case 200, so that the assembly efficiency may be further improved.

In the case where the structure of the protective covers 500A and 500B is implemented by the above-implemented configuration, the gap D between the first protective cover 500A and the second protective cover 500B may be variably determined depending on the width (based on the Y-axis) of the first coupling portion 530A.

In addition, the overlapping area S between the first area of the first protective cover 500A and the second area of the second protective cover 500B may be variably determined depending on the relative arrangement height (based on the Z-axis) of the second protective cover 500B or/and the vertical extension length of the second protective cover 500B.

Depending on the embodiment, unlike the configuration illustrated in the drawing, the second coupling portion 530B may be provided in the second protective cover 500B, replacing the entirety or a part of the first coupling portion 530A of the first protective cover 500A.

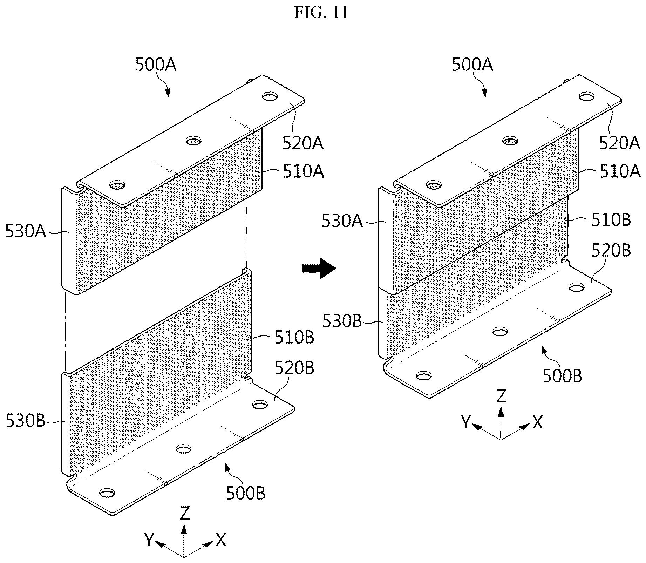

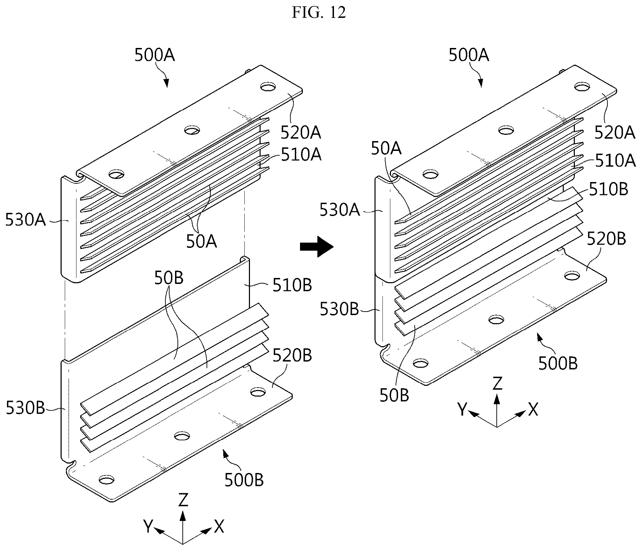

FIG. 11 is a drawing illustrating protective covers 500A and 500B implemented in a mesh form according to an embodiment of the present disclosure, and FIG. 12 is a drawing illustrating an example of protective covers 500A and 500B provided with a protrusion.

As illustrated in FIG. 11, at least one of the first protective cover 500A and the second protective cover 500B of the present disclosure may be configured in a mesh form with a porous structure. The mesh structure may be formed only in the first body 510A of the first protective cover 500A, but may also be formed in the first coupling portion 530A depending on the embodiment. The second protective cover 500B may also be configured in the same manner.

As described above, in the case where the protective covers 500A and 500B are configured in a mesh form, the discharge efficiency of venting gas or the like to be discharged to the outside may be improved, and a function of screening particles (discharges), such as sparks, may be also performed through physical contact with a plurality of holes.

Even if the mesh structure formed on the surfaces of the protective cover 500A and 500B is blocked by particles such as sparks, the protective cover 500A and 500B, as described above, may serve as a resistor that physically blocks or prevents the discharge of sparks or the like.

The first protective cover 500A of the present disclosure may include a first protrusion 50A illustrated in FIG. 12 according to an embodiment.

The first protrusion 50A may be configured to protrude from the first body 510A in a direction away from the side frame 220, that is, in the inward direction (-Y-axis direction) of the pack case 200 and, preferably, may be configured to be inclined upward as illustrated in the drawing. In addition, a plurality of first protrusion 50A may be provided in the first body 510A so as to be arranged vertically along the vertical direction.

As described above with reference to FIG. 4, gas or the like generated inside moves from the top toward the first protective cover 500A of the present disclosure and physically collides with the first protective cover 500A to move downward.

Therefore, in the case where the first protrusion 50A is formed to be inclined upward described above, it is possible to provide a blocking direction opposite the direction of the movement, which may more effectively weaken the power of sparks or flames with strong straightness and may further increase the efficiency of collecting or capturing sparks or the like.

As explained above, after passing through the first protective cover 500A, gas or the like moves upward again by the second protective cover 500B. Therefore, in the case where the second protrusion 50B provided on the second protective cover 500B is configured to be inclined downward as illustrated in the drawing, sparks or the like moving upward may be more effectively blocked.

The battery pack 1000 according to the present disclosure may further include a battery management system (not shown). The battery management system (BMS) may be mounted in the inner space of the pack case 200, and may be configured to control overall charging/discharging operations or data transmission/reception operations of the battery cell 100 or battery module 10.

In addition, the battery pack 1000 according to the present disclosure may further include a battery disconnect unit. The battery disconnect unit (BDU) may be configured to control electrical connections between battery cells in order to manage the power capacity and function of the battery pack 1000. To this end, the battery disconnect unit may include a power relay, a current sensor, a fuse, and the like. The battery disconnect unit is also provided in units of packs, not units of modules, and various disconnect units known at the time of filing the present disclosure may be provided.

In addition, the battery pack 1000 according to the present disclosure may further include various battery pack components known at the time of filing the present disclosure. For example, the battery pack 1000 may further include an MSD (Manual Service Disconnector) that allows a worker to manually disconnect a service plug to cut off power.

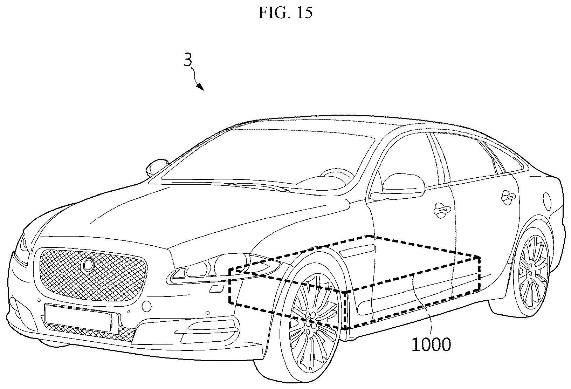

FIG. 15 is a drawing schematically illustrating a vehicle including a battery pack 1000 according to an embodiment of the present disclosure.

Referring to FIG. 15, a vehicle 3 according to an embodiment of the present disclosure may include one or more battery packs 1000 according to the above-described embodiments. The vehicle 3 according to the present disclosure may be, for example, an electric vehicle, a hybrid vehicle, or a plug-in hybrid vehicle. The vehicle 3 includes a four-wheel vehicle and a two-wheel vehicle. The vehicle 3 may be operated by receiving power supplied from the battery pack 1000 or the battery module 10 according to an embodiment of the present disclosure.

As described above, although the present disclosure has been described with reference to limited embodiments and drawings, the present disclosure is not limited thereto, and various modifications and variations are possible without departing from the technical idea of the present disclosure and the scope of equivalence of the claims to be described below by those skilled in the art to which the present disclosure pertains.

The attached drawings for the purpose of explaining the present disclosure and illustrating embodiments thereof may be illustrated to be somewhat exaggerated in order to emphasize or highlight the subject matter of the present disclosure. However, it should be interpreted that it is obvious that various modifications are possible to those skilled in the art to which the present disclosure pertains, taking into consideration the description above and configurations illustrated in the drawings.

In addition, it is apparent that the terms such as first, second, upper, lower, or vertical in the description of the present disclosure are merely instrumental conceptual terms used to relatively distinguish respective components (elements) from each other, and are not intended to indicate a specific order, priority, or the like or to absolutely and physically distinguish the respective components (elements) from each other.

## Claims

1. A battery pack comprising:
a plurality of battery cells;
a pack case configured to store the plurality of battery cells and having a discharge hole configured to discharge gas generated inside to an outside;
a first protective cover configured to cover a first area, which is a partial area of the discharge hole; and
a second protective cover installed closer to the discharge hole than the first protective cover and configured to cover a second area, which is another partial area of the discharge hole, so as to have a cover area overlapping the first protective cover.

2. The battery pack according to claim 1,
wherein the pack case comprises:
a base frame on which the plurality of battery cells are seated; and
a side frame having the discharge hole, and
wherein the first and second protective covers are configured to face the side frame.

3. The battery pack according to claim 1,
wherein the second protective cover is installed spaced apart from the first protective cover.

4. The battery pack according to claim 3,
wherein the first or second protective cover
comprises a coupling portion configured physically connect the first and second protective covers so that the first and second protective covers are spaced apart from each other.

5. The battery pack according to claim 1,
wherein one or more of the first and second protective covers are configured in a mesh form with a porous structure.

6. The battery pack according to claim 1,
wherein the first area is an upper area of the discharge hole, and
wherein the second area is a lower area of the discharge hole.

7. The battery pack according to claim 6,
wherein a lower end of the first protective cover is positioned higher than a lower end of the discharge hole, and
wherein an upper end of the second protective cover is positioned lower than an upper end of the discharge hole.

8. The battery pack according to claim 1,
wherein the first protective cover is connected to an upper frame of the pack case.

9. The battery pack according to claim 1,
wherein the second protective cover is connected to a base frame of the pack case.

10. The battery pack according to claim 1,
wherein the first protective cover
comprises a first protrusion configured to protrude outward.

11. The battery pack according to claim 10,
wherein the second protective cover
comprises a second protrusion configured to protrude outward.

12. The battery pack according to claim 11,
wherein the first protrusion is configured to be inclined upward, and
wherein the second protrusion is configured to be inclined downward.

13. The battery pack according to claim 1,
further comprising a module case having an inner space in which the plurality of battery cells are stored and a venting hole formed at a top thereof in communication with the inner space.

14. A vehicle comprising a battery pack according to any one of claims 1 to 13.
